# EUROPEAN PATENT APPLICATION

(11) **EP 3 125 472 A1**
(43) Date of publication of application: **01.02.2017**
(21) Application number: 15306237.7
(22) Date of filing: 30.07.2015
(51) Int. Cl.: H04L 12/54, H04L 12/715, H04L 12/707, H04L 12/721

(54) **TELECOMMUNICATION SYSTEM, METHOD AND COMPUTER READABLE MEDIUM TO CONTROL HOW A TRANSMISSION OF PACKETS OF A DATA FLOW IS REALIZED**

(71) Applicant: ALCATEL LUCENT, 92100 Boulogne-Billancourt (FR)
(72) Inventor: KAHN, Colin Leon, MURRAY HILL, NJ New Jersey 07974-0636 (US); URIE, Alistair, 91620 NOZAY (FR)
(74) Representative: Berthier, Karine

(57) **Abstract**

Telecommunication system, method and computer readable medium, comprising two equipments 101 and 102 connected together with at least two communication networks 103 and 104, a control apparatus 105 controlling how a transmission of a data flow between the two equipments is realized. The control apparatus 105 is adapted to instruct at least one of the equipments 101 or 102 to selectively control routing of the packets among the two communications networks 103 and 104 and/or to enable or disable the transmission of the data flow by one of the communication networks 103 or 104. The control apparatus 105 is adapted to take into account a mobility requirement of one of the equipments 101 or 102 or bandwidth requirements of one of the equipments 101 or 102 and applications associated to one of the equipments or transmission delay requirements of one the equipments 101 or 102 and the associated applications or requirements imposed by a standard respected by the communications networks 103 or 104.

## Description

### FIELD OF INVENTION

The present subject matter relates to a control apparatus to control how a transmission of packets, between two equipments of a telecommunication system is realized. The equipments are connected using at least two communication networks for example 3GPP, Wi-Fi or 5G networks. The present subject matter can also be used in the case of equipments connected via at least two paths using one communication network. The communication networks are also called accesses. The control apparatus is also called control interface or controller.

### BACKGROUND

A new Multi Path TCP (MPTCP) protocol has been specified by the IETF (RFC6824). Some operating systems, as for example the operating system IOS7 of Apple, implement this new protocol. This new protocol (MPTCP) allows for reverse multiplexing of flows so they can exploit multiple IP paths between a sender and a receiver. This protocol can be used to manage connectivity via Wi-Fi and 3GPP networks, so an apparatus implementing this protocol can seamlessly switch the delivery of individual packets or flows of packets associated with a given service between available accesses. It does this by having a fixed configuration in the device and server for the use of MPTCP. Though MTCP has been used to provide a hot-standby connection for a telecommunication apparatus (packets are not sent on both paths simultaneously), MPTCP can also be used for a variety of other purposes for apparatus simultaneously connected to several communication networks. For example it can be used to federate the bandwidth associated with Wi-Fi and 3GPP network or it can be used to achieve some application specific metrics, such as achieving an application required throughput, maximizing battery life by preferencing the most efficient access or saving money by preferencing the least costly access.

MPTCP sets up multiple TCP sub-flows (e.g.: one on Wi-Fi network, one on a 3GPP network) for a single TCP Socket connection with an application. It divides packets between the available sub-flows according to end-to-end bandwidth as sensed by TCP congestion control. Hence fewer or more packets may be sent on the Wi-Fi network vs. 3GPP network based on the bandwidth sensed between the apparatus and an MPTCP compatible server in the network. Sub-flows may be added or dropped as access options come and go, allowing for seamless mobility from the perspective of the applications running within the apparatus. Likewise MPTCP may be used to recover from loss of one of network connections with MPTCP procedures used to retransmit lost packets over the remaining connections without intervention from the application.

MPTCP is compatible with existing applications that use the standard TCP socket API (Application Programming Interface) to initiate a connection. This is the de-facto interface between non-MPTCP aware applications and MPTCP. These applications have no control of the partitioning of packets among MPTCP sub-flows, and hence no control of relative utilization of the networks connected to the apparatus. The standard TCP/IP API allows applications to specify "Socket Options" to control send/receive buffer sizing, TCP delay (Nagle Algorithm) and other functions. When applications use Socket Options on a device that supports MPTCP, it is recommended that MPTCP apply those options equally to the applicable MPTC sub-flows.

In the RFC6897: Multipath TCP (MPTCP) Application Interface Considerations, enhancements to the Socket API are proposed for MPTCP-Aware Applications. This provides some level of MPTCP control to the application that binds the socket. Specifications are proposed for a basic API, and potential requirements are proposed for a future advanced API. In summary, basic API functions include:
1- Enable/Disable MPTCP
2- Bind MPTCP to local addresses, or add a local address to an MPTCP connection
3- Remove a local address from an MPTCP connection
4- Get address pairs being used by MPTCP sub flows
5- Get a local connection ID for an MPTCP connection

### SUMMARY

This summary is provided to introduce concepts related to the control of how a transmission of packets is realized.

In one implementation, a telecommunication system is described. The telecommunication system comprises two equipments 101 and 102 connected together with at least two communication networks 103 and 104, a control apparatus 105 controlling how a transmission of a data flow between the two equipments is realized. The control apparatus 105 is adapted to instruct at least one of the equipments 101 or 102 to selectively control routing of the packets among the two communications networks 103 and 104 and/or to enable or disable the transmission of the data flow by one of the communication networks 103 or 104. The control apparatus 105 is adapted to take into account a mobility requirement of one of the equipments 101 or 102 or bandwidth requirements of one of the equipments 101 or 102 and applications associated to one of the equipments or transmission delay requirements of one the equipments 101 or 102 and the associated applications or requirements imposed by a standard respected by the communications networks 103 or 104.

In another implementation, a method to control how a transmission of packets of a data flow between at least two equipments is realized is described. The two equipments 101 and 102 belong to a telecommunication system and are connected together with at least two communication networks 103 and 104. The method comprises a step 301 of selectively control routing of packets among the two communications networks 103 and 104 and/or a step 302 of enabling or disabling the transmission of the packets by one of the communication networks 103 or 104. The method is adapted to take into account a mobility requirement of one of the equipments 101 or 102 or bandwidth requirements of one of the equipments 101 or 102 and applications associated to one of the equipments or transmission delay requirements of one the equipments 101 or 102 associated applications or requirements imposed by a standard respected by the communications networks 103 or 104.

In another implementation a computer-readable medium is described. The computer-readable medium has embedded thereon a method to control how a transmission of packets of a data flow between at least two equipments is realized. The method comprises a step 301 of selectively control routing of packets among the two communications networks 103 and 104 and/or a step 302 of enabling or disabling the transmission of the packets by one of the communication networks 103 or 104. The method is adapted to take into account a mobility requirement of one of the equipments 101 or 102 or bandwidth requirements of one of the equipments 101 or 102 and applications associated to one of the equipments or transmission delay requirements of one the equipments 101 or 102 associated applications or requirements imposed by a standard respected by the communications networks 103 or 104.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents a first embodiment of the system object of the present subject matter.
Figure 2 presents an embodiment of how the control apparatus and equipments exchange messages.
Figure 3 presents a first embodiment of the method object of the present subject matter.
Figure 4 presents a second embodiment of the method object of the present subject matter.
Figure 5 presents a third embodiment of the method object of the present subject matter.
Figure 6 presents a fourth embodiment of the method object of the present subject matter.
Figure 7 presents another embodiment of the system object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The present subject matter provides a way to control multipath selection using Multipath Transmission Control Protocol (MPTCP) in the bearer plane and Software Defined Networking (SDN) in the control plane, where the network controls how MPTCP is used in the bearer plane. Software-defined networking is an approach to computer networking that allows network administrators to manage network services through abstraction of lower-level functionality. This is done by decoupling the system that makes decisions about where traffic is sent (the control plane) from the underlying systems that forward traffic to the selected destination (the data plane). It allows for example the control of the usage of a 3GPP network or a Wi-Fi network when an apparatus, connected to both of these networks, wants to transmit data. This control can be made by operators and/or by third party applications and allows an optimization based on metrics beyond TCP throughput and the preference of the application that established the TCP/IP socket. It may also be used for multi-technology interworking in 5G.

The present subject matter proposes a control mechanism defined so that an external controller can influence the use of MPTCP. This control mechanism is separate from the socket API. In the absence of that control, MPTCP blindly uses TCP congestion control to determine how data are routed to the available interfaces (typically Wi-Fi and 3GPP), or basis use of MPTCP on pre-configured information.

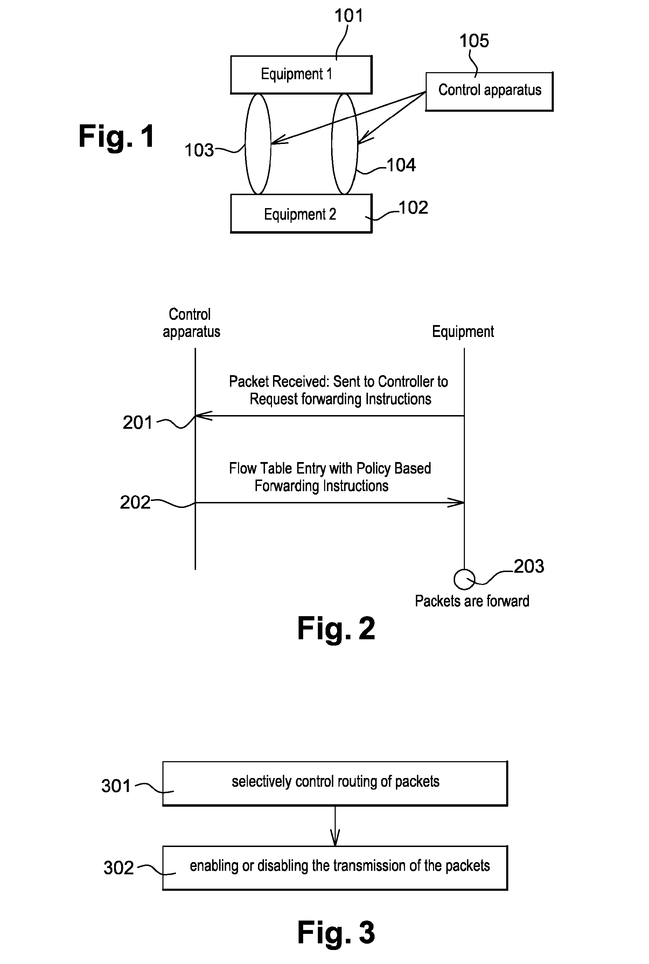

The figure 1 presents a first embodiment of a telecommunication system object of the present subject matter. This telecommunication system comprises;
- two equipments 101 and 102 connected together with at least two communication networks 103 and 104 and
- a control apparatus 105 controlling how a transmission of a data flow between the two equipments is realized.

The control apparatus 105 is adapted to instruct at least one of the equipments 101 or 102:
- to selectively control routing of the packets among the two communications networks 103 and 104 and/or
- to enable or disable the transmission of the data flow by one of the communication networks 103 or 104
the control apparatus 105 being adapted to take into account;
- a mobility requirement of one of the equipments 101 or 102 or
- bandwidth requirements of one of the equipments 101 or 102 and applications associated to one of the equipments or
- transmission delay requirements of one the equipments 101 or 102 and the associated applications or
- requirements imposed by a standard respected by the communications networks 103 or 104.

By applications associated to the equipments we mean applications that run or are executed by the equipment, or whose packets pass through the equipment.

The action of selectively control routing of the packets among the two communication networks can be done for example by balancing the transmission of packets among the two communication networks.

In another embodiment the control apparatus is also adapted to take into account:
- battery status of one of the equipments 101 or 102, or
- the cost of the using communication networks 103 and 104, or
- the contention for use of communication networks 103 and 104 by other devices, or
- the relative capabilities, such as delay and throughput of communication networks 103 and 104 or
- estimations of the current performance of communication networks 103 and 104

In other words within the telecommunication system of the present subject matter, the control apparatus 105 uses, to determine the forwarding rules used by an equipment, one or several of the following criteria:
- Network Resource Utilization: Network states (for example congestion on Wi-Fi and/or 3GPP communication networks)
- Network Topology: Network Connectivity as well as available network services and capabilities.
- Subscriber Intelligence: Subscriber specific information gleamed from analytics. It could include loyalty management status, customer care call records, cellular and Wi-Fi usage, total lifetime value, application usage etc.
- Application Requirements: The needs of applications associated to the equipments (reliability, bandwidth requirements, mobility needs, etc.)
- Subscription Information: Subscription level (e.g.: gold/silver/bronze), billing and charging information per-access option associated to the communication networks.
- Device Intelligence: Device type, screen size, processor and storage capabilities.
- Network performance: Estimations of the current performance experienced by equipments 101 or 102 of the networks (for example the radio throughput, currently used modulation and coding scheme (MCS), current buffer length, etc.)

In an embodiment one of the equipments 102 or 103 is also adapted;
- to determine if parameters of the packets respect a matching criteria,
- to associate forwarding rules to the packets based on the matching criteria,
- to forward the packets to one of the communication networks according to the associated forwarding rules.

In an embodiment one of the equipments 102 or 103 is adapted, according to instructions received from control apparatus 105;
- to compare a bandwidth requirement of the associated applications to data rates of the communications networks 103 and 104 and
- to forward all the packets to only one of the communication networks 103 or 104 with a data rate above the bandwidth requirement, or
- to forward the packets to the two communications networks 103 and 104 for which the sum of the flow rate is above the bandwidth requirement, without duplicating the forwarding of the packets or
- to forward the packets to the two communications networks 103 and 104 for which the sum of the flow rate is above the bandwidth requirement, with the duplication of the forwarding of the packets in order to transmit each packet in both communication networks.

In other words, within the embodiment of the previous section, the control apparatus implements an enhanced forwarding rule with additional options in the matching criteria and subsequent instructions/actions. This enhanced forwarding rule can be realized by expanding the currently defined SDN protocols like for example OpenFlow.

In an embodiment the forwarding rule allows the use of multi-connectivity to federate bandwidth, establish hot-standby links for reliability or to ensure minimum performance requirements, create redundant sub-flows (the same data are sent on two or more sub-flows) and/or to support mobility as new sub-flows become available and others terminate. This forwarding rule can be associated to different matching criterium. In general one can match on L2 and L3 parameters in the packet header, ingress port and meta-data associated with the packet. An example flow entry in this case could be: IF(5-Tuple=xxx)then "forward packets to all available ports to federate BW", or "forward packets to Wi-Fi port and use 3GPP port as hot standby".

In another embodiment the forwarding rule handles the case of specific application requirements such as minimum required bandwidth (e.g.: for Http Adaptive Streaming (HAS)), and maximum allowable jitter and delay. While HAS delivery of streaming video adapts the data rate to that sensed on the communication channel, there is always a minimum rate that the channel must support, below which the video will stall. In this embodiment for example, the control apparatus may configure MPTCP layer in the switch to send packets out of only the Wi-Fi port if the throughput on that port is greater than a threshold, and if not to federate bandwidth on both the LTE and Wi-Fi ports so the throughput requirement is achieved. An example flow entry in this case could be: If (5-tuple=yyy and average flow rate>"x") then forward the subflow at port "A", else forward two subflows one at port "A" and one at port "B"

In another embodiment the forwarding rule indicates desired telecommunication network or interface utilization, for example by providing weight factors for use of 3GPP and Wi-Fi telecommunication networks. An example flow entry in this embodiment could be: IF(5-Tuple=xxx)then "forward x% of packets to Wi-Fi port and y% to 3GPP port". or, in programming the user equipment, one could have a rule that said IF(battery_level > x%) use both Wi-Fi and 3GPP ports, else just use 3GPP port.

In a last embodiment the control apparatus uses the forwarding rule to set which of the available telecommunication networks will be used by MPTCP (in other words whether a sub-flow on an interface of the network will be established or maintained). This may be used to specify application policies, for example that an IMS voice application will only use a 3GPP telecommunication network. Using this forwarding rule we would be altering the connectivity between the device and network, not just the routing of packets as directed by a flow table entry (this could save battery power). So the policy based instruction may be IF(active application= only "IMS")drop Wi-Fi link in MPTCP

In an embodiment the control apparatus 105 is also configured;
- to establish operator policy for handling the data flow, especially data flow transmitted by the applications associated to one of the equipments and
- to receive information relevant to delivery of the data flow, especially the data flow transmitted by the applications associated to one of the equipments and
if configuration of forwarding is enable within the control apparatus 105;
- to send the operator policy, especially policy forwarding rules, to the equipments 101 or 102.

A data flow associated to an application is also known as application specific flow.

By operator policy we mean the preference operators have for how service is to be handled. It is commonly used in 3GPP to specify QoS. For example the "policy" for handling VoIP flows from IMS may be to provide a high level of QoS. In our case the operator may have a "policy" that Netflix flows have at least 200kbps. This is then reflected in the flow table entry (which consists of matching criteria to identify the flow and forwarding instructions that execute the desired action).

By application flow delivery we mean the delivery of an application flow. The information received determines how the network will treat an application flow. For example, relevant information could come from a DPI function that detects that an application flow is a video flow that requires a certain minimum bandwidth. This information in part determines how that flow will be handled (delivered) by the network.

In an embodiment the communication networks 103 and 104 support the transport of TCP protocol between the two equipments 101 and 102The two equipments 101 and 102 implement an MPTCP protocol layer and the control apparatus 105 is configured to use SDN procedures to control the MPTCP protocol layer of the two equipments 101 and 102. The telecommunication system may also be at least partially controlled using software defined network (SDN) procedures. SDN decouples control plane functions that determine the forwarding route of a packet from user plane functions that forward a packet. The former are implemented in a Controller while the latter are implemented in Switches. SDN procedures are procedures that use a protocol such as OpenFlow to communicate between such a Controller and Switch.

In an embodiment of the present subject matter, the Control Apparatus 105 is a Controller, and the two equipments 101 and 102 are Switches.

The system of this embodiment can maximize throughput or provide a hot-standby, it also allows other important factors to influence interface use. For example, Wi-Fi communication network may cost less (or be free) while 3GPP communication network may be relatively expensive, and this may vary according to the Wi-Fi and 3GPP communication network selected (e.g.: when roaming). The difference in fees means the controller preferences the lower cost network, with that preference being stronger according to the price sensitivity of the application. This would be reflected in an operator policy, provided to the controller for an application. Certain applications (for example IP Multimedia Subsystem IMS) may require 3GPP communication network, while others would benefit little from federating the bandwidth and throughput of a Wi-Fi communication network and a 3GPP communication network. This would be reflected in operator policy on the controller. The controller receives a policy from the operator indicating "IMS only on 3GPP". As a result the controller programs the network so IMS flows are only forwarded to 3GPP networks. Network and Subscriber intelligence may provide insights that could preferentially trigger the use of one or the other access options in order to provide a better subscriber experience. For example, applications that benefit from low latency and jitter may be better off using one available interface, or for security reasons unknown to the application, use of one interface may be preferred. For a particular application the operator may specify to the controller that only one type of network should be used. Furthermore, certain applications could benefit from mobility provided by MPTCP, while others could benefit from a hot-standby sub-flow providing higher reliability. Another application could benefit from increased throughput from federated bandwidth.

The equipments and apparatus of the previous embodiment, comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

The telecommunication system of the present subject matter supports the above use case with flexibly and efficiently. This results from the programmability of the configuration and operation of MPTCP, under SDN Control, so a multiplicity of factors can be considered dynamically. In other words the system of the present subject matter proposes an SDN control mechanism for MPTCP that goes beyond the TCP/IP socket API and its potential extensions.

The equipments are configured by the control apparatus. In order to this configuration the control apparatus and the equipment exchange messages. The figure 2 presents an embodiment of the exchange of the message. In this embodiment the equipment (for example a switch a proxy or user equipment) sends a first message 201 to the control apparatus to request forwarding instructions from the control apparatus. This first message 201 is sent after the reception of packets by the equipment for which it currently does not hold an appropriate policy based forwarding instruction. The packet originates from an application, either on the network or on the user equipment side. After the reception of this first message 201 the control apparatus reply by sending a second message 202 to the equipment. This second message 202 contains a flow table entry with policy based forwarding instructions. Following this exchange of messages, the equipment will forward the packets according to the policy transmitted by the control apparatus.

The figure 3 presents an embodiment of a method of controlling how a transmission of packets of a data flow between at least two equipments 101 and 102 (proxy, switch or user equipment) is realized by a control apparatus 105. The two equipments 101 and 102 belonging to a telecommunication system and are connected together with at least two communication networks 103 and 104. The method comprises:
- a step 301 of selectively control routing of packets among the two communications networks 103 and 104 and/or
- a step 302 of enabling or disabling the transmission of the packets by one of the communication networks 103 or 104
The method is adapted to take into account;
- a mobility requirement of one of the equipments 101 or 102 or
- bandwidth requirements of one of the equipments 101 or 102 and applications associated to one of the equipments or
- transmission delay requirements of one the equipments 101 or 102 associated applications or
- requirements imposed by a standard respected by the communications networks 103 or 104.

In an embodiment the method is also adapted to take into account:
- battery status of one of the equipments 101 or 102, or
- the cost of the using telecommunication networks 103 and 104, or
- the contention for use of telecommunication networks 103 and 104 by other devices, or
- the relative capabilities, such as delay and throughput of telecommunication networks 103 and 104 or
- current performance experienced by equipments 101 or 102 of telecommunication networks 103 and 104

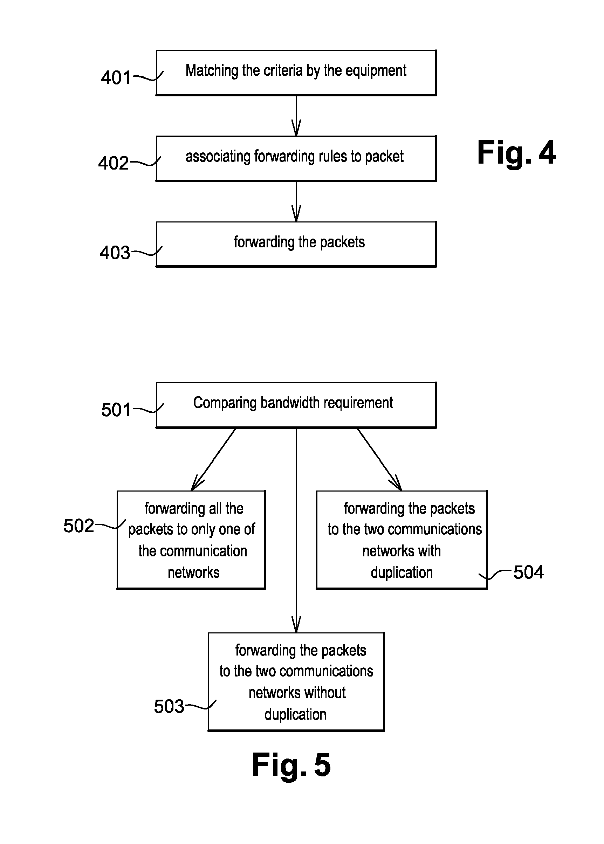

The figure 4 presents an embodiment of the step 301 to selectively control routing. In this embodiment this step 301 comprises;
- a step 401 of determining if parameters of the packet respect one of the matching criteria,
- a step 402 of associating forwarding rules to packet based on the matching criteria,
- a step 403 of forwarding the packets to one of the communication networks according to the associated forwarding rules.

Figure 5 presents an embodiment of the step 301 to selectively control routing. In this embodiment the step 301 comprises;
- a step 501 of comparing a bandwidth requirement of the associated applications to data rates of the communications networks 103 and 104 and
- a step 502 of forwarding all the packets to only one of the communication networks 103 or 104 with a data rate above the bandwidth requirement, or
- a step 503 of forwarding the packets to the two communications networks 103 and 104 for which the sum of the flow rate is above the bandwidth requirement, without duplicating the forwarding of the packets or
- a step 504 of forwarding the packets to the two communications networks 103 and 104 for which the sum of the flow rate is above the bandwidth requirement, with the duplication of the forwarding of the packets in order to transmit each packet in both communication networks.

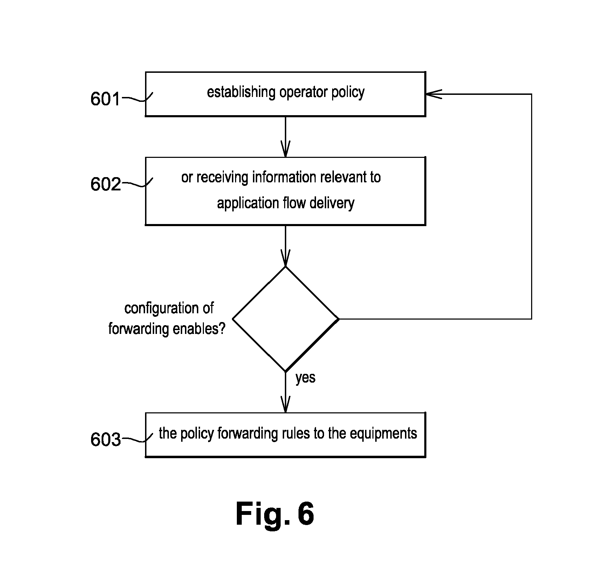

The figure 6 presents an embodiment of the method object of the present subject matter. In this embodiment the method comprises the following initial steps:
- a step 601 of establishing operator policy for handling application specific flows and
- a step 602 of receiving information relevant to deliver an application flow and
if configuration of forwarding is enable within the control apparatus 105;
- a step 603 of sending the policy forwarding rules to the equipments 101 or 102.

By operator policy we mean the preference operators have for how service is to be handled. It is commonly used in 3GPP to specify QoS. For example the "policy" for handling VoIP flows from IMS may be to provide a high level of QoS. In our case the operator may have a "policy" that Netflix flows have at least 200kbps. This is then reflected in the flow table entry (which consists of matching criteria to identify the flow and forwarding instructions that execute the desired action).

By application flow delivery we mean the delivery of an application flow. The information received determines how the network will treat an application flow. For example, relevant information could come from a DPI function that detects that an application flow is a video flow that requires a certain minimum bandwidth. This is information in part determines how that flow will be handled (delivered) by the network.

In an embodiment of the method, the communication networks 103 and 104 support transport of TCP protocol between the two equipments (101 and 102) and the two equipments (101 and 102) implement an MPTCP protocol layer and the control apparatus (105) is configured to use SDN procedures to control the MPTCP protocol layer of the two equipments (101 and 102).

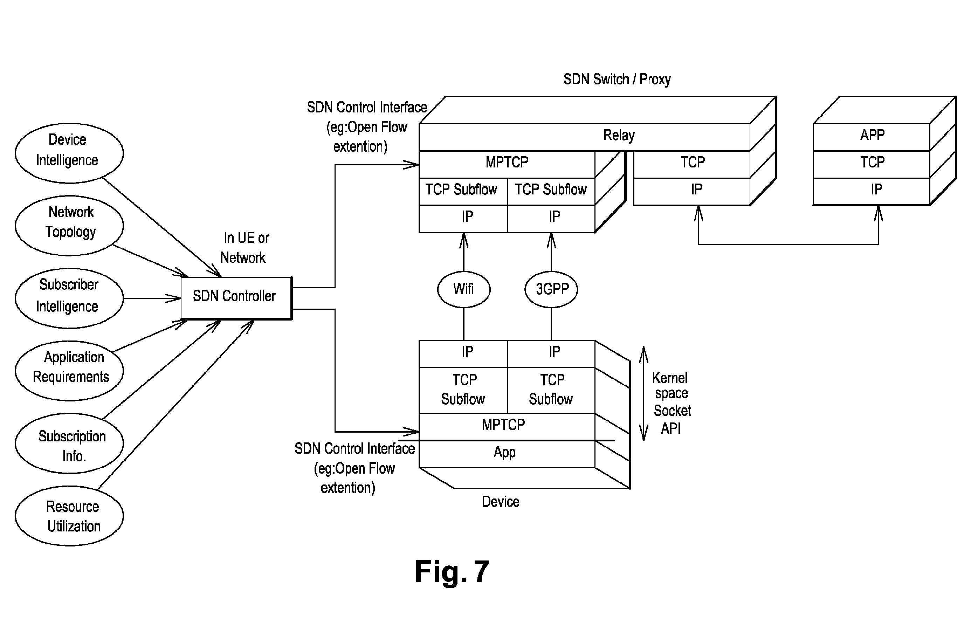

An embodiment of the present subject matter is shown in the figure 7. The diagram shows the protocol stacks in a User Equipment UE (also called device) and Switch/Proxy terminating MPTCP. The Switch/proxy supports MPTCP as a proxy for a non-MPTCP capable application, offering MPTCP towards the UE, and standard TCP towards the application. In an alternative embodiment, the SDN Switch/Proxy could be an endpoint such as a CDN. The Device and SDN Switch/Proxy are simultaneously connected via Wi-Fi and 3GPP communication network, with separate IP addresses or ports assigned for each (a prerequisite for MPTCP). The Relay Function has bound a socket to MPTCP using the standard TCP/IP API. During the depicted session, Wi-Fi and 3GPP access may come and go, with MPTCP adding and removing sub-flows accordingly.

In this embodiment the SDN controller uses a control interface to program how MPTCP will be used. The controller is normally located in the network, but could also be located within the device. The controller could use extensions to OpenFlow, or another protocol to direct MPTCP on the use of switch resources associated with available communication networks (for example Wi-Fi and 3GPP) that can be used for sending and receiving sub-flows. The Controller may use information not available locally in the Switch/proxy such as:
- Network Resource Utilization: Network states (congestion on Wi-Fi and/or 3GPP access legs)
- Network Topology: Network Connectivity as well as available network services and capabilities
- Subscriber Intelligence: Subscriber specific information gleamed from analytics. It could include loyalty management status, customer care call records, cellular and Wi-Fi usage, total lifetime value, application usage etc.
- Application Requirements: The needs of specific applications (reliability, bandwidth requirements, mobility needs, etc.)
- Subscription Information: Subscription level (e.g.: gold/silver/bronze), billing and charging information per-access option.
- Device Intelligence: Device type, screen size, processor and storage capabilities.

In this embodiment the SDN controller may configure the switch/proxy to support one or more of the following:
1 - Control MPTCP Mode: This indicates whether MPTCP will use multi-connectivity to federate bandwidth, establish hot-standby links for reliability or to ensure minimum performance requirements, create redundant sub-flows (the same data are sent on two or more sub-flows) and/or to support mobility as new sub-flows become available and others terminate.
2 - Specify application requirements such as minimum required bandwidth (e.g.: for Http Adaptive Streaming (HAS)), and maximum allowable jitter and delay. For example, the SDN Controller may configure MPTCP layer in the switch to send packets out of only the Wi-Fi port if the throughput on that port is greater than a threshold, and if not to federate bandwidth on both the LTE communication network and Wi-Fi communication network so the throughput requirement is achieved.
3 - Indicate desired interface utilization, for example by providing weight factors for use of 3GPP and Wi-Fi communication networks.
4 -Control which of the available switch/proxy interfaces will be used by MPTCP (whether a sub-flow on an interface will be established). This may be used by the Controller to specify application policies, for example that an IMS voice application will only use a 3GPP communication network.

In this embodiment the SDN Control Interface also allows the application to get information from MPTCP such as:
1 - Sub-flows, associated communication networks, usage statistics
2 - The establishment and teardown of sub-flows, associated to communication networks

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the present subject matter is a computer program, configured to realize the method, described figure 3. This method is dedicated to the control of how a transmission of packets of a data flow between two equipments 101 and 102 is realized. The two equipments belong to a telecommunication system and are connected together with two communication networks 103 and 104. The said method comprises;
- a step 301 of selectively control routing of packets among the two communications networks 103 and 104 and/or
- a step 302 of enabling or disabling the transmission of the packets by one of the communication networks 103 or 104
The said method is adapted to take into account;
- a mobility requirement of one of the equipments 101 or 102 or
- bandwidth requirements of one of the equipments 101 or 102 and applications associated to one of the equipments or
- transmission delay requirements of one the equipments 101 or 102 associated applications or
- requirements imposed by a standard respected by the communications networks 103 or 104.

In an embodiment the method is also adapted to take into account:
- battery status of one of the equipments 101 or 102, or
- the cost of the using telecommunication networks 103 and 104, or
- the contention for use of telecommunication networks 103 and 104 by other devices, or
- the relative capabilities, such as delay and throughput of telecommunication networks 103 and 104 or
- current performance experienced by equipments 101 or 102 of telecommunication networks 103 and 104

In an embodiment a computer-readable medium having embedded thereon a computer program described in the previous section is proposed.

## Claims

1. Telecommunication system comprising;
• two equipments (101 and 102) connected together with at least two communication networks (103 and 104),
• a control apparatus (105) controlling how a transmission of a data flow between the two equipments is realized,
the control apparatus (105) being adapted to instruct at least one of the equipments (101 or 102):
• to selectively control routing of the packets among the two communications networks (103 and 104) and/or
• to enable or disable the transmission of the data flow by one of the communication networks (103 or 104)
the control apparatus (105) being adapted to take into account;
• a mobility requirement of one of the equipments (101 or 102) or
• bandwidth requirements of one of the equipments (101 or 102) and applications associated to one of the equipments or
• transmission delay requirements of one the equipments (101 or 102) and the associated applications or
• requirements imposed by a standard respected by the communications networks (103 or 104).

2. Telecommunication system according to claim 1 wherein at least one of the equipments (101 or 102) is also adapted;
• to determine if parameters of the packets respect a matching criteria,
• to associate forwarding rules to the packets based on the matching criteria,
• to forward the packets to one of the communication networks according to the associated forwarding rules

3. Telecommunication system according to claim 1 wherein at least one of the equipments (101 or 102) is adapted, according to instructions received from control apparatus (105);
• to compare a bandwidth requirement of the associated applications to data rates of the communications networks (103 and 104) and
• to forward the packets to only one of the communication networks (103 or 104) with a data rate above the bandwidth requirement, or
• to forward the packets to the two communications networks (103 and 104) for which the sum of the flow rate is above the bandwidth requirement, without duplicating the forwarding of the packets or
• to forward the packets to the two communications networks (103 and 104) for which the sum of the flow rate is above the bandwidth requirement, with the duplication of the forwarding of the packets in order to transmit each packet in both communication networks.

4. Telecommunication system according to claim 1 or 2 or 3 wherein the control apparatus (105) is also configured;
• to establish operator policy for handling the data flow and
• to receive information relevant to delivery of the data flow and
• to send the operator policy to the equipments (101 or 102).

5. Telecommunication system according to claim 1 or 2 or 3 or 4, wherein
• the communication networks (103 and 104) support transport of TCP protocol between the two equipments (101 and 102) and
• the two equipments (101 and 102) implement an MPTCP protocol layer and
• the control apparatus (105) is configured to use SDN procedures to control the MPTCP protocol layer of the two equipments (101 and 102).

6. Method to control how a transmission of packets of a data flow between at least two equipments is realized, the two equipments (101 and 102) belonging to a telecommunication system and being connected together with at least two communication networks (103 and 104), the said method comprising;
• a step (301) of selectively control routing of packets among the two communications networks (103 and 104) and/or
• a step (302) of enabling or disabling the transmission of the packets by one of the communication networks (103 or 104)
the said method being adapted to take into account;
• a mobility requirement of one of the equipments (101 or 102) or
• bandwidth requirements of one of the equipments (101 or 102) and applications associated to one of the equipments or
• transmission delay requirements of one the equipments (101 or 102) associated applications or
• requirements imposed by a standard respected by the communications networks (103 or 104).

7. Method according to claim 6 wherein the step (301) of selectively control routing comprises;
• a step (401) of determining if parameters of the packet respect one of the matching criteria,
• a step (402) of associating forwarding rules to packet based on the matching criteria,
• a step (403) of forwarding the packets to one of the communication networks according to the associated forwarding rules.

8. Method according to claim 6 wherein the step (301) of selectively control routing also comprises;
• a step (501) of comparing a bandwidth requirement of the associated applications to data rates of the communications networks (103 and 104) and
• a step (502) of forwarding the packets to only one of the communication networks (103 or 104) with a data rate above the bandwidth requirement, or
• a step (503) of forwarding the packets to the two communications networks (103 and 104) for which the sum of the flow rate is above the bandwidth requirement, without duplicating the forwarding of the packets or
• a step (504) of forwarding the packets to the two communications networks (103 and 104) for which the sum of the flow rate is above the bandwidth requirement, with the duplication of the forwarding of the packets in order to transmit each packet in both communication networks.

9. Method according to claims 6 or 7 or 8 also comprising;
• a step (601) of establishing operator policy for handling the data flow and
• a step (602) of receiving information relevant to delivery of the data flow and
• a step (603) of sending the operator policy to the equipments (101 or 102).

10. Method according to claims 6 or 7 or 8 or 9, wherein
• the communication networks (103 and 104) support transport of TCP protocol between the two equipments (101 and 102) and
• the two equipments (101 and 102) implement an MPTCP protocol layer and
• the control apparatus (105) is configured to use SDN procedures to control the MPTCP protocol layer of the two equipments (101 and 102).

11. A computer-readable medium having embedded thereon a method to control how a transmission of packets of a data flow between at least two equipments is realized, the two equipments belonging to a telecommunication system and being connected together with at least two communication networks (103 and 104), the said method comprising;
• a step (301) of selectively control routing of packets among the two communications networks (103 and 104) and/or
• a step (302) of enabling or disabling the transmission of the packets by one of the communication networks (103 or 104)
the said method being adapted to take into account;
• a mobility requirement of one of the equipments (101 or 102) or
• bandwidth requirements of one of the equipments (101 or 102) and applications associated to one of the equipments or
• transmission delay requirements of one the equipments (101 or 102) associated applications or
• requirements imposed by a standard respected by the communications networks (103 or 104).

12. Computer-readable medium according to claim 11 wherein the step (301) of selectively control routing comprises;
• a step (401) of determining if parameters of the packet respect one of the matching criteria,
• a step (402) of associating forwarding rules to packet based on the matching criteria,
• a step (403) of forwarding the packets to one of the communication networks according to the associated forwarding rules.

13. Computer-readable medium according to claim 11 the step (301) of selectively control routing also comprises;
• a step (501) of comparing a bandwidth requirement of the associated applications to data rates of the communications networks (103 and 104) and
• a step (502) of forwarding the packets to only one of the communication networks (103 or 104) with a data rate above the bandwidth requirement, or
• a step (503) of forwarding the packets to the two communications networks (103 and 104) for which the sum of the flow rate is above the bandwidth requirement, without duplicating the forwarding of the packets or
• a step (504) of forwarding the packets to the two communications networks (103 and 104) for which the sum of the flow rate is above the bandwidth requirement, with the duplication of the forwarding of the packets in order to transmit each packet in both communication networks.

14. Computer-readable medium according to claims 11 or 12 or 13 also comprising;
• a step (601) of establishing operator policy for handling the data flow and
• a step (602) of receiving information relevant to the delivery of the data flow and
• a step (603) of sending the operator policy to the equipments (101 or 102).

15. Computer-readable medium according to claims 11 or 12 or 13 or 14, wherein
• the communication networks (103 and 104) support transport of TCP protocol between the two equipments (101 and 102) and
• the two equipments (101 and 102) implement an MPTCP protocol layer and
• the control apparatus (105) is configured to use SDN procedures to control the MPTCP protocol layer of the two equipments (101 and 102).

## Amended claims

### Amended claims in accordance with Rule 137(2) EPC.

1. Telecommunication system comprising;
• two equipments (101 and 102) connected together with at least two communication networks (103 and 104),
• a control apparatus (105) controlling how a transmission of a data flow between the two equipments is realized,
the control apparatus (105) being adapted to instruct at least one of the equipments (101 or 102):
• to selectively control routing of the packets among the two communications networks (103 and 104) and/or
• to enable or disable the transmission of the data flow by one of the communication networks (103 or 104)
the control apparatus (105) being adapted to take into account;
• a mobility requirement of one of the equipments (101 or 102) or
• bandwidth requirements of one of the equipments (101 or 102) and applications associated to one of the equipments or
• transmission delay requirements of one the equipments (101 or 102) and the associated applications or
• requirements imposed by a standard respected by the communications networks (103 or 104)
furthermore, within this telecommunication system
• the communication networks (103 and 104) support transport of TCP protocol between the two equipments (101 and 102) and
• the two equipments (101 and 102) implement an MPTCP protocol layer and
• the control apparatus (105) is configured to use SDN procedures to control the MPTCP protocol layer of the two equipments (101 and 102).

2. Telecommunication system according to claim 1 wherein at least one of the equipments (101 or 102) is also adapted;
• to determine if parameters of the packets respect a matching criteria,
• to associate forwarding rules to the packets based on the matching criteria,
• to forward the packets to one of the communication networks according to the associated forwarding rules

3. Telecommunication system according to claim 1 wherein at least one of the equipments (101 or 102) is adapted, according to instructions received from control apparatus (105);
• to compare a bandwidth requirement of the associated applications to data rates of the communications networks (103 and 104) and
• to forward the packets to only one of the communication networks (103 or 104) with a data rate above the bandwidth requirement, or
• to forward the packets to the two communications networks (103 and 104) for which the sum of the flow rate is above the bandwidth requirement, without duplicating the forwarding of the packets or
• to forward the packets to the two communications networks (103 and 104) for which the sum of the flow rate is above the bandwidth requirement, with the duplication of the forwarding of the packets in order to transmit each packet in both communication networks.

4. Telecommunication system according to claim 1 or 2 or 3 wherein the control apparatus (105) is also configured;
• to establish operator policy for handling the data flow and
• to receive information relevant to delivery of the data flow and
• to send the operator policy to the equipments (101 or 102).

5. Method to control how a transmission of packets of a data flow between at least two equipments is realized, the two equipments (101 and 102) belonging to a telecommunication system and being connected together with at least two communication networks (103 and 104), the said method comprising;
• a step (301) of selectively control routing of packets among the two communications networks (103 and 104) and/or
• a step (302) of enabling or disabling the transmission of the packets by one of the communication networks (103 or 104)
the said method being adapted to take into account;
• a mobility requirement of one of the equipments (101 or 102) or
• bandwidth requirements of one of the equipments (101 or 102) and applications associated to one of the equipments or
• transmission delay requirements of one the equipments (101 or 102) associated applications or
• requirements imposed by a standard respected by the communications networks (103 or 104)
furthermore,
• the communication networks (103 and 104) support transport of TCP protocol between the two equipments (101 and 102) and
• the two equipments (101 and 102) implement an MPTCP protocol layer and
• the control apparatus (105) is configured to use SDN procedures to control the MPTCP protocol layer of the two equipments (101 and 102).

6. Method according to claim 5 wherein the step (301) of selectively control routing comprises;
• a step (401) of determining if parameters of the packet respect one of the matching criteria,
• a step (402) of associating forwarding rules to packet based on the matching criteria,
• a step (403) of forwarding the packets to one of the communication networks according to the associated forwarding rules.

7. Method according to claim 5 wherein the step (301) of selectively control routing also comprises;
• a step (501) of comparing a bandwidth requirement of the associated applications to data rates of the communications networks (103 and 104) and
• a step (502) of forwarding the packets to only one of the communication networks (103 or 104) with a data rate above the bandwidth requirement, or
• a step (503) of forwarding the packets to the two communications networks (103 and 104) for which the sum of the flow rate is above the bandwidth requirement, without duplicating the forwarding of the packets or
• a step (504) of forwarding the packets to the two communications networks (103 and 104) for which the sum of the flow rate is above the bandwidth requirement, with the duplication of the forwarding of the packets in order to transmit each packet in both communication networks.

8. Method according to claims 5 or 6 or 7 also comprising;
• a step (601) of establishing operator policy for handling the data flow and
• a step (602) of receiving information relevant to delivery of the data flow and
• a step (603) of sending the operator policy to the equipments (101 or 102).

9. A computer-readable medium having embedded thereon a method to control how a transmission of packets of a data flow between at least two equipments is realized, the two equipments belonging to a telecommunication system and being connected together with at least two communication networks (103 and 104), the said method comprising;
• a step (301) of selectively control routing of packets among the two communications networks (103 and 104) and/or
• a step (302) of enabling or disabling the transmission of the packets by one of the communication networks (103 or 104)
the said method being adapted to take into account;
• a mobility requirement of one of the equipments (101 or 102) or
• bandwidth requirements of one of the equipments (101 or 102) and applications associated to one of the equipments or
• transmission delay requirements of one the equipments (101 or 102) associated applications or
• requirements imposed by a standard respected by the communications networks (103 or 104)
furthermore;
• the communication networks (103 and 104) support transport of TCP protocol between the two equipments (101 and 102) and
• the two equipments (101 and 102) implement an MPTCP protocol layer and
• the control apparatus (105) is configured to use SDN procedures to control the MPTCP protocol layer of the two equipments (101 and 102).

10. Computer-readable medium according to claim 9 wherein the step (301) of selectively control routing comprises;
• a step (401) of determining if parameters of the packet respect one of the matching criteria,
• a step (402) of associating forwarding rules to packet based on the matching criteria,
• a step (403) of forwarding the packets to one of the communication networks according to the associated forwarding rules.

11. Computer-readable medium according to claim 9 the step (301) of selectively control routing also comprises;
• a step (501) of comparing a bandwidth requirement of the associated applications to data rates of the communications networks (103 and 104) and
• a step (502) of forwarding the packets to only one of the communication networks (103 or 104) with a data rate above the bandwidth requirement, or
• a step (503) of forwarding the packets to the two communications networks (103 and 104) for which the sum of the flow rate is above the bandwidth requirement, without duplicating the forwarding of the packets or
• a step (504) of forwarding the packets to the two communications networks (103 and 104) for which the sum of the flow rate is above the bandwidth requirement, with the duplication of the forwarding of the packets in order to transmit each packet in both communication networks.

12. Computer-readable medium according to claims 9 or 10 or 11 also comprising;
• a step (601) of establishing operator policy for handling the data flow and
• a step (602) of receiving information relevant to the delivery of the data flow and
• a step (603) of sending the operator policy to the equipments (101 or 102).
